# EUROPEAN PATENT APPLICATION

(11) **EP 4 287 330 A1**
(43) Date of publication of application: **06.12.2023**
(21) Application number: 23176196.6
(22) Date of filing: 30.05.2023
(51) Int. Cl.: H01M 10/04

(54) **ELECTRODE PLATE STACKING APPARATUS HAVING PENDULUM-TYPE UNWINDER FOR SEPARATOR**

(30) Priority: 02.06.2022 KR 20220067660
(71) Applicant: Innometry Co., Ltd., Hwaseong-si Gyeonggi-do (KR)
(72) Inventor: SHIN, Hyuk, 18482 Hwaseong-si (KR); HONG, Nam Hyeong, 18392 Hwaseong-si (KR); YEOM, Cheol Won, 18109 Osan-si (KR)
(74) Representative: Reiser & Partner Patentanwälte mbB

(57) **Abstract**

A separator unwinder actuated in a pendulum-type is provided in an electrode plate stacking apparatus with a stationary stack base. A positive electrode plate and a negative electrode plate are stacked alternately onto the stack surface of the stack base, and a separator is provided therebetween. The electrode plates are stacked onto the stack base from right and left sides of the stack base. The separator unwound from the separator roll reaches the stack base via a plurality of rollers. The separator covers the electrode plate placed on the stack surface of the stack base by the pendulum-type unwinder. In this way, it is possible to supply the separator stably and stably.

## Description

### TECHNICAL FIELD

The present invention relates to an electrode plate stacking apparatus for manufacturing a zigzag-type battery cell and method for the same.

### BACKGROUND

In general, a chemical cell is a cell composed of a pair of electrodes of a positive electrode plate and a negative electrode plate, and an electrolyte, and the amount of energy that can be stored in the cell varies depending on the material constituting the electrodes and the electrolyte. These chemical batteries are classified into the primary batteries that are used only for one-time discharge due to its very low charging reaction, and the secondary batteries that can be reused through repetitive charging and discharging.

Because of its advantages, the secondary batteries are being applied to various technical fields throughout the industry and are not only widely used as energy sources for mobile communication devices such as smartphones, but also as an energy source for electric vehicles.

Such a secondary battery is composed as a form in which a positive electrode plate, a separator, and a negative electrode plate are sequentially stacked and immersed in an electrolyte. There are two methods of manufacturing the internal cell stack of such a secondary battery.

For small secondary batteries, a method of arranging a negative electrode plate and a positive electrode plate on separators and manufacturing them in a jelly-roll form is widely used, while, for medium to large batteries having more electric capacity, a method in which a negative electrode plate and a positive electrode plate are stacked with a separator in an appropriate order is widely used.

In the zigzag type (also referred to as 'z-folding type') stacking method widely used among the methods of manufacturing a secondary battery cell stack by the stacking method, the separator forms a zigzag folded form, and the negative electrode plate and the positive electrode plate are alternately stacked in an inserted form.

Various schemes are known as a method of supplying a separator onto a stack base on which an electrode plate is stacked.

Korean Patent Application Publication No. 10-2009-0030175 (published on March 24, 2009) discloses that a positive or negative electrode plate is transferred to an alignment tray by a transfer robot and is aligned in an alignment tray and then transferred to a stack tray. When the stack tray horizontally moves left and right, the separator is unwound onto the stack tray to cover the positive electrode plate or the negative electrode plate. This process is repeated such that the electrode plates are stacked while a separator is interposed between the electrode plates.

In the method of moving the stack base between the stacking position of the positive electrode plate and the stacking position of the negative electrode plate as described above, a speed limit due to the movement of the stack base is generated. Since the horizontally moving stack base moves in the order of movement-stop-opposite movement, if its moving speed is increased, the inertial force is increased as well by acceleration. Thus, when the stack base stops, the force applied to the portion of the separator gripped by a gripper is increased. This may cause damage to the separator, and thus the moving speed of the stack base should be limited not to exceed a predetermined level.

### SUMMARY OF THE INVENTION

### PROBLEM TO BE SOLVED

The purpose of the present invention is to provide an apparatus and a method for stacking electrode plates, which can quickly stack a separator with a simple structure.

The purpose of the present invention is to provide an apparatus and a method for stacking electrode plates with a new concept capable of supplying a separator without moving a stack base.

The purpose of the present invention is to provide a separator unwinding assembly capable of quickly stacking a separator with a simple structure.

The purpose of the present invention is to provide a new concept separator unwinding assembly capable of supplying a separator without moving a stack base.

The problems to be solved by the present invention are not limited to the above-mentioned problems, and other problems not mentioned can be clearly understood by a person having ordinary skill in the art from the following description.

### SOLUTION TO SOLVE PROBLEM

The apparatus and method for stacking electrode plates having a separator unwinding assembly, and the separator unwinding assembly according to the present invention for achieving the above objects include the following aspects and any combination thereof.

One aspect of the present invention is an apparatus for stacking electrode plates for a prismatic secondary battery, wherein a positive electrode plate and a negative electrode plate are alternately supplied on a stack base and a separator is supplied between the positive electrode plate and the negative electrode plate, comprising a separator unwinding assembly configured to cover an electrode plate placed on the stack base with the separator, wherein the separator unwinding assembly is configured to swing around a rotation axis located above a stack surface of the stack base.

Another aspect of the present invention is the apparatus for stacking electrode plates, wherein the stack base is stationary.

Another aspect of the present invention is the apparatus for stacking electrode plates wherein the separator unwinding assembly comprises one or more arm; a shaft coupled to one end of the arm and arranged along the rotation axis; two or more rollers coupled to the other end of the arm; and an actuator for swinging the arm.

Another aspect of the present invention is the apparatus for stacking electrode plates, wherein the separator is adapted to be drawn out between the two or more rollers as the separator unwinding assembly swings.

Another aspect of the present invention is the apparatus for stacking electrode plates, further comprising a pick-and-place unit integrally coupled to the separator unwinding assembly to be swung together with the separator unwinding assembly.

Another aspect of the present invention is a separator unwinding assembly used for an apparatus for stacking electrode plates for a prismatic secondary battery, wherein a positive electrode plate and a negative electrode plate are alternately supplied on a stack base and a separator is supplied between the positive electrode plate and the negative electrode plate, wherein the separator unwinding assembly is configured to swing around a rotation axis located on an upper side of the stacking surface of the stack base.

Another aspect of the present invention is the separator unwinding assembly, wherein the stack base is stationary.

Another aspect of the present invention is the separator unwinding assembly, wherein the separator unwinding assembly comprising one or more arm, a shaft coupled to one end of the arm and arranged along the rotation axis, two or more rollers coupled to the other end of the arm, and an actuator for swinging the arm.

Another aspect of the present invention is the separator unwinding assembly, wherein the separator is adapted to be drawn out between the two or more rollers as the separator unwinding assembly swings.

Another aspect of the present invention is the separator unwinding assembly, further comprising a pick-and-place unit integrally coupled to the separator unwinding assembly to be swung together with the separator unwinding assembly.

Another aspect of the present invention is a method for stacking electrode plates for a prismatic secondary battery, wherein a positive electrode plate and a negative electrode plate are alternately supplied on a stack base and a separator is supplied between the positive electrode plate and the negative electrode plate, and wherein the separator is supplied onto the stack base using a separator unwinding assembly, and the separator unwinding assembly is configured to swing around a rotation axis located above a stacking surface of the stack base.

Another aspect of the present invention is the method for stacking electrode plates, wherein the stack base is stationary.

Another aspect of the present invention is the method for stacking electrode plates, wherein the separator unwinding assembly comprises one or more arm; a shaft coupled to one end of the arm and arranged along the rotation axis, two or more rollers coupled to the other end of the arm, and an actuator for swinging the arm.

Another aspect of the present invention is the method for stacking electrode plates, wherein the separator is adapted to be drawn out between the two or more rollers as the separator unwinding assembly swings.

Another aspect of the present invention is the method for stacking electrode plates, further comprising a pick-and-place unit integrally coupled to the separator unwinding assembly to be swung together with the separator unwinding assembly.

### EFFECTS OF THE INVENTION

According to the apparatus and the method for stacking electrode plates of the present invention, a separator can be drawn on a stack base by a simple structure.

In addition, according to the electrode plate stacking apparatus and method of the present invention, the stacking speed of the separator can be maximally increased.

In addition, according to the electrode plate stacking apparatus and method of the present invention, the separator can be stably stacked without damage.

The effects of the present invention are not limited to the effects mentioned above, and other effects not mentioned can be clearly understood by a person having ordinary skill in the art from the following description.

### BRIEF DESCRIPTION OF THE DRAWINGS

FIG. 1 illustrates a process of stacking electrode plates on a stack base in an electrode plate stacking apparatus having a stationary stack base according to the present invention, in which steps (a) to (c) are perspective views, and steps (a') to (c') are front views.
FIG. 2 illustrates an order in which electrode plates and a separator are stacked according to the present invention.
FIG. 3 is a simplified illustration of stacking of electrode plates according to FIG. 2.

### DETAILED DESCRIPTION OF THE INVENTION

The embodiments shown in the attached drawings are for a clear understanding of the present invention, and the present invention is not limited thereto.

In the following description, components having the same reference numerals in different drawings have similar functions, so that they will not be described repeatedly unless necessary for an understanding of the invention. The known components will be briefly described or omitted. However, it should not be understood as being excluded from the examples.

Also, the terminology used in the present application is used to describe a specific embodiment and is not intended to limit the present invention. The expression of the singular includes a plurality of representations, unless the context clearly indicates otherwise. It will be further understood that the terms "comprise," "have" and so forth specify the presence of stated a feature, integer, step, operation, element, or component described in this specification, but do not preclude the presence or addition of one or more other feature, integer, step, operation, element, component, or combination thereof.

Unless otherwise defined, all terms used herein, including technical or scientific terms, have the same meaning as commonly understood by one of ordinary skill in the art to which the present invention pertains. Such terms as those defined in commonly used dictionaries should be interpreted as having a meaning that is consistent with their meaning in the context of the relevant art, and are not to be interpreted in an idealized or overly formal sense unless expressly so defined herein.

When a component is referred to as being "connected" or "coupled" to another component, it should be understood that there may be another component in the middle, although it may be directly connected or coupled to the other component. On the other hand, when a component is referred to as being "directly connected" or "directly coupled" to another component, it should be understood that there is no other component in the middle.

Hereinafter, the present invention will be described in detail with reference to the accompanying drawings.

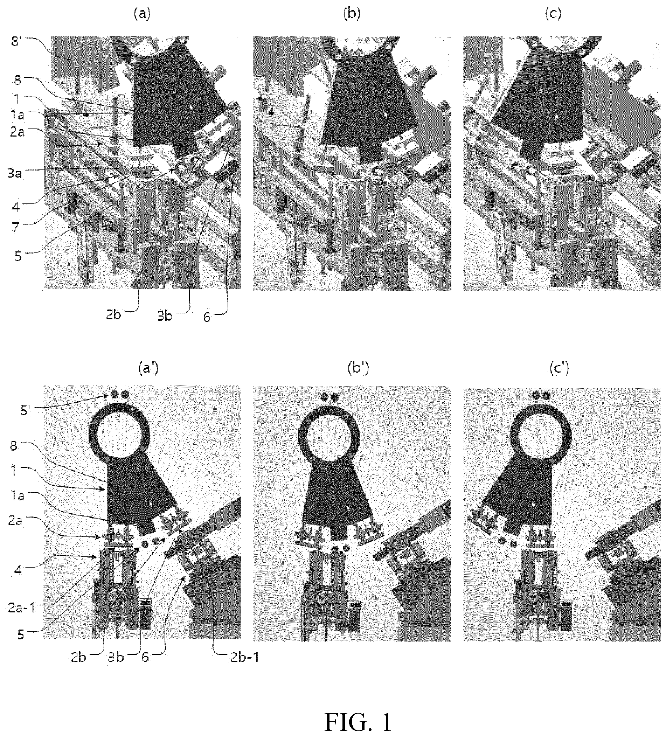

In FIG. 1, steps (a) to (c) correspond to steps (a') to (c'), respectively. Reference numbers are displayed only in steps (a) and (a') and are omitted in the remaining steps.

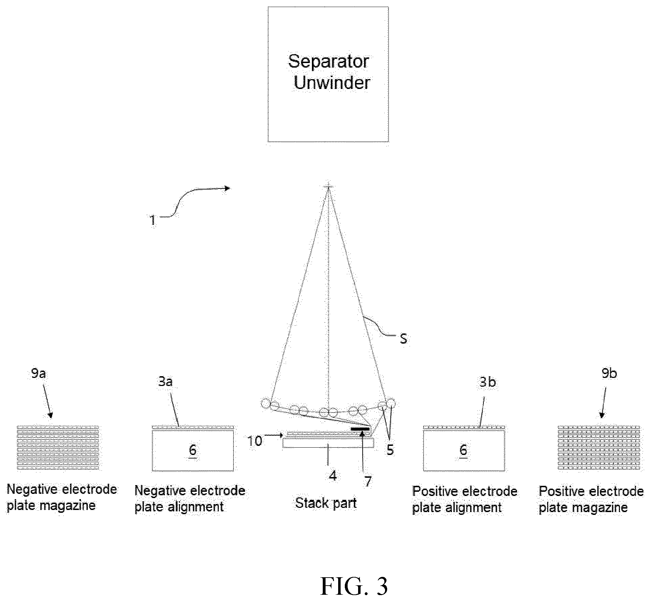

Referring to FIG. 1, when one electrode plate is first stacked on a stack base 4 and then the separator unwinder 1 swings for a separator (not shown for convenience of description, refer to 'S' in FIG. 3) to cover the electrode plate, and subsequently, the other electrode plate is stacked. In the present invention, the separator unwinder 1 is moved so that the separator covers the stacked electrode plate without moving the stack base 4. The separator unwinder 1 can repeat a reciprocating rotation by a predetermined angle such as a pendulum. Therefore, the center of swing (or rotation) of the separator unwinder 1 is located above the stack base 4. The pendulum type rotation of the separator unwinder 1 is referred to as "swing," "swing motion" or "reciprocating rotation" in the present specification.

A pair of rollers 5 are provided under the protrusion part 1a protruding below the arms 8, 8' of the separator unwinder 1, and are adapted so that a separator can slide therebetween. Two or more arms 8, 8' may be provided. Alternatively, one arm suitable for the swing may be adopted. A shaft (not shown) may be provided along the axis of the swing of the separator unwinder 1. In FIG. 1, the center of the circular portion of the upper end portion of the arm 8 of the separator unwinder forms a rotation axis, and the shaft may be arranged concentrically with the center of the circular portion.

The separator which is provided in the form of a roll (not shown) can pass through the rollers 5 via a plurality set of rollers including rollers 5' disposed above the rollers 5. The rollers 5 may be two or more, preferably a pair, so that the separator may slide therebetween. The sliding action of the separator between the rollers can be expressed as supply, feed, or drawing of a separator, depending on the situation.

Actuators or pick-and-place (P/P) units 2a and 2b for loading/unloading electrode plates are provided to the left and right sides of the protrusion part 1a. P/P units 2a, 2b are configured to adsorb (unload) a negative electrode plate 3a or a positive electrode plate 3b from a transfer means such as a belt conveyor 6 to stack (load) the negative electrode plate 3a or the positive electrode plate 3b on the stack base 4. During this process, each of adsorption surfaces 2a-1, 2b-1 can be driven in the order of descending-ascending-descending. The roller 5 and P/P units 2a, 2b are attached to the separator unwinder 1 to move together when the unwinder 1 moves. It would be possible to arrange the P/P units separately from the separator unwinder 1 so as not to move or swing together with the unwinder 1.

The swing motion is temporarily stopped at both ends of the reciprocating rotation of the separator unwinder 1. During the temporary stop of the swing motion, one P/P unit can stack an electrode plate on the stack base while the other P/P unit unloads an electrode plate from the conveyor. The range or angle of the swing motion of the separator unwinder 1 can be set such that the electrode plate adsorption surface 2a-1 of the negative electrode plate P/P unit 2a faces the stack surface of the stack base 4 at one end of the swing motion (step (a')), and the electrode plate adsorption surface 2b-1 of the positive electrode plate P/P unit 2b faces the stack surface of the stack base 4 at the other end of the swing motion (step (c')).

The electrode plates to be stacked on the stack base 4 can be supplied by an inclined vacuum belt conveyor 6 as illustrated in FIG. 1, or can be unloaded directly from the magazines (see FIG. 3) or can be supplied in other appropriate manner.

Referring now to steps (a) and (a'), the separator unwinder 1 is at the right end of its swing motion. While the separator unwinder 1 is temporarily stopped at this position, the left P/P unit 2a descends toward the stack base 4 to put down a negative electrode plate 3a, and at the same time, the right P/P unit 2b gets a positive electrode plate 3b from the belt conveyor 6. When the electrode plate is placed on the stack base 4, stack grippers 7 fix the electrode plate. The stack grippers 7 can be provided near four corners of the electrode plate. In steps (a) and (a'), two right grippers 7 among the four grippers can fix the negative electrode plate 3a.

Subsequently, the separator unwinder 1 swings about the round portion of the upper part such as a pendulum to reach the state illustrated in step (c) (and (c')) via the state shown in step (b) (and (b')).

Steps (b) and (b') show a state in which the separator unwinder 1 is swinging to the left (i.e., clockwise). According to this swing motion, the separator supplied between the rollers 5 gets to cover a negative electrode plate just stacked. As such, the separator is drawn out through a pair of rollers 5 to cover a negative electrode plate 3a as the swing motion of the separator unwinder 1 is performed.

Steps (c) and (c') illustrate a state in which the separator unwinder 1 is at the left end of the range of swing motion. In this state, the negative electrode plate has completely been covered by the separator. While the separator unwinder 1 is temporarily stopped at this position, the right P/P unit 2b descends toward the stack base 4 to put down a positive electrode plate 3b on the separator, and at the same time, the left P/P unit 2a gets a negative electrode plate 3a from a belt conveyor (not shown).

Then, a right-side swing motion of the unwinder 1 is executed with the positive electrode plate 3b being fixed by two left grippers.

According to the swing motion of the separator unwinder 1 described so far, the stack base 4 stays still (without moving) during the process of covering the electrode plates with the separator. In other words, the stack base is not moved but the configuration surrounding the stack base (here, the separator unwinder) moves for the separator to be interposed or stacked.

By repeating the above steps, the negative electrode plate and the positive electrode plate are alternately stacked, and the separator is interposed between the electrode plates to form a zigzag-type battery cell.

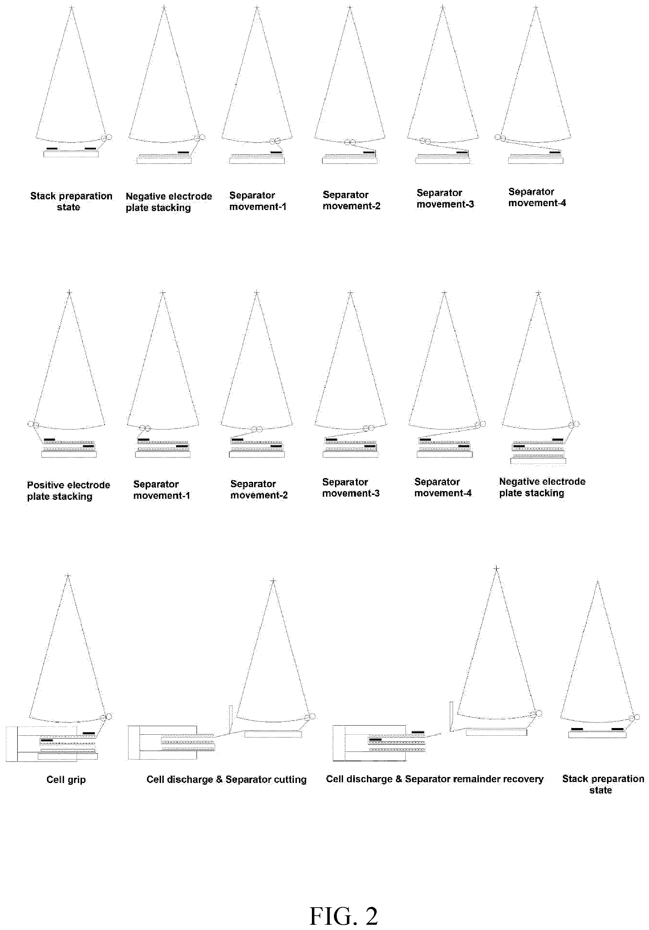

FIG. 2 schematically illustrates an order of stacking electrode plates using the apparatus shown in FIG. 1. The stacking order in FIG. 2 progresses from left to right in the upper line. In the remaining lines, the order of progress is from left to right as well. The fan shape represents the range of the swing motion of the pendulum-type unwinder 1, and the cross shape at the upper end represents the center of the swing motion. The fan-shaped swing range was drawn based on the center line of the unwinder 1 (in other words, a straight line connecting the swing center and the roller 5).

FIG. 2 shows a process of covering an electrode plate placed on a stack base with a separator supplied between a pair of rollers according to a swing motion of an unwinder (indicated by "separator movement"). The fixing positions of the grippers according to the stacking of each electrode plate are illustrated (reference numerals of the elements shown in FIG. 2 are indicated in FIG. 3).

One cycle starts from "stack preparation state" and includes "negative electrode plate stacking", "separator movement-1 to 4", "positive electrode plate stacking", and an additional "separator movement-1 to 4." When the stacking is completed, a battery cell is manufactured after the further steps of "cell grip," "cell discharge & separator cutting" and "cell discharge & separator remainder recovery." For the sake of simplicity, operations after electrode plate stacking are shown in "cell grip," but in practice, a cell grip will be performed after a necessary number of electrode plates are stacked.

FIG. 3 shows the steps from "negative electrode plate stacking" to "separator movement-4" of FIG. 2, displayed at a time. An electrode plate is stacked on the stack base 4, and is covered by a separator S with the electrode plate gripped by the gripper 7. A horizontal surface on which the electrode plate is stacked may be referred to as a stack surface 10. A negative electrode plate 3a and a positive electrode plate 3b are aligned on the belt conveyors 6 arranged on the left and right sides of the stack base 4, and a negative electrode plate magazine 9a and a positive electrode plate magazine 9b are respectively arranged on the outside thereof. The electrode transferring configuration is illustrated schematically in this figure compared to the belt conveyor 6 in FIG. 1 which is shown as inclined. Such configuration is replaceable with any configuration capable of transferring the electrode plates towards the stack base 4. The separator unwinder 1 is shown with rollers 5, 5 through which the separator S' is drawn out.

As described above, according to the present invention, a separator unwinder operating in a pendulum type with respect to an electrode plate stacking apparatus with a stationary stack base is provided. A positive electrode plate and a negative electrode plate are stacked alternately onto the stack surface of the stack base, and a separator is provided therebetween. The separator unwound from the separator roll reaches the stack base via a plurality of rollers. A separator is covered by a pendulum-type unwinder over the electrode plate placed on the stack surface of the stack base. In this way, it is possible to supply the separator rapidly and stably.

The apparatus and method for stacking electrode plates according to an embodiment of the present invention have been described. However, the present invention is not limited to the above-described embodiment, and various modifications and variations can be made by one of ordinary skill in the art to which the present invention belongs without departing from the spirit and spirit of the present invention claimed in the claims.

### EXPLANATION OF REFERENCE NUMBERS

| | | | |
|---|---|---|---|
| 1: | separator unwinder | | |
| 1a: | protrusion part | 2a, 2b: | Pick and Place (P/P) unit |
| 2a-1, 2b-1: | electrode plate adsorption surface | 3a, 3b: | electrode plate |
| 4: | stack base | 5, 5': | roller |
| 6: | belt conveyor | 7: | stack gripper |
| 8, 8': | arm | 9a, 9b: | magazine |
| 10: | stack surface | S: | separator |

## Claims

1. An apparatus for stacking electrode plates for a prismatic secondary battery, wherein a positive electrode plate and a negative electrode plate are alternately supplied on a stack base and a separator is supplied between the positive electrode plate and the negative electrode plate, comprising:
a separator unwinding assembly configured to cover an electrode plate placed on the stack base with the separator,
wherein the separator unwinding assembly is configured to swing about an axis located above a stack surface of the stack base.

2. The apparatus of claim 1, wherein the stack base is stationary.

3. The apparatus of claim 1, wherein the separator unwinding assembly comprises:
one or more arm;
a shaft arranged along the axis and coupled to one end of the arm;
two or more rollers coupled to the other end of the arm; and
an actuator for swinging the arm.

4. The apparatus of claim 3, wherein the separator is adapted to be drawn out between the two or more rollers as the separator unwinding assembly swings.

5. The apparatus of claim 1, further comprising a pick-and-place unit coupled to the separator unwinding assembly to be swung together with the separator unwinding assembly.

6. A separator unwinding assembly used for an apparatus for stacking electrode plates for a prismatic secondary battery, wherein a positive electrode plate and a negative electrode plate are alternately supplied on a stack base and a separator is supplied between the positive electrode plate and the negative electrode plate,
wherein the separator unwinding assembly is configured to swing around an axis located on an upper side of the stacking surface of the stack base.

7. The separator unwinding assembly of claim 6, wherein the stack base is stationary.

8. The separator unwinding assembly of claim 6, wherein the assembly comprising:
one or more arm;
a shaft arranged along the axis and coupled to one end of the arm;
two or more rollers coupled to the other end of the arm; and
an actuator for swinging the arm.

9. The separator unwinding assembly of claim 8, wherein the separator is adapted to be drawn out between the two or more rollers as the separator unwinding assembly swings.

10. The separator unwinding assembly of claim 6, further comprising a pick-and-place unit coupled to the separator unwinding assembly to be swung together with the separator unwinding assembly.

11. A method for stacking electrode plates for a prismatic secondary battery, wherein a positive electrode plate and a negative electrode plate are alternately supplied on a stack base and a separator is supplied between the positive electrode plate and the negative electrode plate, comprising:
providing a separator onto the stack base with a separator unwinding assembly,
wherein the separator unwinding assembly is configured to swing around an axis located above a stacking surface of the stack base.

12. The method of claim 11, wherein the stack base is stationary.

13. The method of claim 11, wherein the separator unwinding assembly comprises one or more arm;
a shaft arranged along the axis and coupled to one end of the arm;
two or more rollers coupled to the other end of the arm; and
an actuator for swinging the arm.

14. The method of claim 13, wherein the separator is adapted to be drawn out between the two or more rollers as the separator unwinding assembly swings.

15. The method of claim 11, further comprising a pick-and-place unit coupled to the separator unwinding assembly to be swung together with the separator unwinding assembly.
